# EUROPEAN PATENT SPECIFICATION

(11) **EP 3 555 533 B1**
(45) Date of publication and mention of the grant of the patent: **23.08.2023**
(21) Application number: 17816737.5
(22) Date of filing: 13.12.2017
(51) Int. Cl.: F24F 11/00, B08B 15/02, B25J 21/02, B25J 21/00, G21F 7/04

(54) **PROTECTED CONTAINMENT CHAMBER AND CONNECTED METHOD**
GESCHÜTZTE SICHERHEITSKAMMER UND VERBUNDENES VERFAHREN
CHAMBRE DE CONFINEMENT PROTÉGÉE ET MÉTHODE CONNECTÉE

(30) Priority: 15.12.2016 IT 201600126688
(43) Date of publication of application: 23.10.2019
(73) Proprietor: I.M.A. Industria Macchine Automatiche S.p.A., 40064 Ozzano dell'Emilia (BO) (IT)
(72) Inventor: GIOVANNINI, Carlo, 40064 OZZANO DELL'EMILIA (IT); MARABINI, Mirco, 40064 OZZANO DELL'EMILIA (IT)
(74) Representative: Petraz, Gilberto Luigi
(86) International application number: PCT/EP2017/082501
(87) International publication number: WO 2018/108956

(56) References cited:
- WO-A1-98/50134
- WO-A1-2006/125955
- JP-A- H 094 897

## Description

### FIELD OF THE INVENTION

Embodiments described here concern a protected containment chamber and a connected method to control it. In particular, but not exclusively, possible applications of the embodiments described here concern a protected containment chamber inside which products, for example hazardous, toxic, noxious, or carcinogenic products are processed, or are present, and more in general, products that in any case are dangerous for humans, animals or the environment.

Embodiments described here also concern the method to control the protection of the protected chamber by means of a controlled depression.

### BACKGROUND OF THE INVENTION

Containment chambers are known, of the type with a protected chamber, inside which hazardous, toxic and/or noxious products for operators, animals or the environment are processed, or are present.

Protected chambers, for example, can be used in the pharmaceutical field, in particular in the field of production, and/or packaging, of tablets, or pills, of drugs. The tablets, or pills, are moved inside the chamber to carry out various operations thereon, so that during the movement and/or processing it is possible to generate powders and/or residues of drugs inside the protected chamber.

The protected chamber normally comprises air recirculation means, suitable to deliver, inside the chamber, clean air from which possible impurities have been removed by suitable filtering members. The recirculation means, possibly, can also remove excess air.

The protected chamber is generally sealed to prevent any powders and/or residues of hazardous, toxic and/or noxious products treated inside it from escaping through uncontrolled and unmanaged paths.

If the treated products are, for example, tablets, or pills of anticancer drugs, since their components can be very dangerous for the operators, it is necessary to provide an additional guarantee of safety, in the event that the protected chamber is not sealed in a controlled manner, even temporarily. The protected chamber, in particular, is therefore normally provided with devices which generate a desired depression inside, which devices are associated with a suitable control and regulation system. The devices are suitable to maintain the depression in the protected chamber continuously around a tolerated interval of a predefined value, for example -20Pa, and below a predefined safety threshold value.

The protected chamber is, moreover, normally provided with handling and/or introduction means structured in such a way as to prevent direct connection between the inside and the outside of the protected chamber, but such as to possibly allow, for example an operator, to interact with the products and/or with the equipment located inside it.

The handling means, by way of example, can comprise gloves by means of which an operator can introduce his hands into the protected chamber. The gloves normally cooperate with a suitable hole which they themselves seal. When not in use, the gloves are located outside the protected chamber, while during use they are put on by the operator who introduces them into the chamber so as to be able to operate inside it without danger of contamination and leakage of unfiltered air from inside the chamber.

The introduction means can also comprise protected apertures through which objects and/or components and/or products to be handled can be introduced inside the protected chamber. The protected apertures can be of various types such as, for example, pre-chambers with controlled atmosphere, in/out drawers, transit drawers, or controlled with multiple bags defined as "liners" or "bag-in-bag".

The depression inside the protected chamber can therefore be influenced by a plurality of disturbing elements, such as for example the introduction of gloves containing hands inside the chamber, the opening of an introduction and/or exit door, etc. or losses of the controlled seal of the system.

The disturbing elements directly influence the volume of the atmosphere present in the protected chamber itself, so that, when the volume decreases, or increases, the value of the depression also varies accordingly. If the depression varies in terms of reducing its value, this variation can also exceed the expected safety depression value, approaching too close to the pressure of the external environment.

Protected chambers of a known type are therefore necessarily provided with depression control devices suitable to monitor the depression inside the protected chamber. The depression control device communicates, continuously or intermittently, with suitable control and command devices which are normally connected in feedback to the means which condition the depression. Depending on the variations in the depression value, the power of the depression means is varied to maintain the depression around the predefined value.

One disadvantage of known control devices is that the feedback control requires a technical activation time. This causes the depression means to be driven late with respect to the intervention of the depression disturbance factor; this can result in a variation in depression which can exceed the expected reference or safety value.

If, to guarantee that the depression variations generated by the disturbance factors do not exceed the safety threshold value, a depression with a very high value is continuously applied, for example around -40 Pa, phenomena of disturbance can be generated in the equipment, or in the operating means, or in the products present in the protected chamber.

Document WO-A-98/50134 describes an apparatus according to the preamble of claim 1, comprising an isolation chamber provided with access apertures to allow an operator, present in an operating cabin, to handle the material present in the isolation chamber. A stream of filtered air is introduced into the isolation chamber, keeping the latter at a lower pressure than the one present in the operating cabin and a curtain of filtered air is discharged into the operating cabin at a pressure greater than that of the air in the isolation chamber.

Document WO-A-2006/125955 describes an apparatus to create a controlled environment in a casing or chamber, to manage objects or articles, such as the post, which can contain hazardous substances or contaminants. The casing or chamber is provided with means to generate a flow of air which generate a flow of air in the casing or chamber. Objects, such as a mail sorting apparatus, can be located and operated inside the casing or protected chamber and access apertures can be provided to introduce or remove articles or products in a controlled manner and, if they detect contaminating substances inside the controlled environment, they are contained inside the casing or protected chamber.

There is therefore a need to perfect a protected containment chamber and a method to control the protection of the protected chamber which can overcome at least one of the disadvantages of the state of the art.

In particular, one purpose of the present invention is to provide a protected containment chamber, and a connected method to control the protection by depression of the protected chamber, suitable to guarantee that the depression in it always remains below the threshold safety value.

Another purpose of the present invention is to provide a method which allows automatic control and management of the depression.

Another purpose of the present invention is to provide a protected containment chamber, and the connected control method, of which the first is simple to make and the other is easy to use, and which at the same time are highly reliable.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a protected containment chamber is provided, for example, but not restrictively, for performing operations on products containing hazardous, toxic and/or noxious materials. The products to be treated can be, for example, tablets or pills which, by their nature or when they have been handled, can release powders, residues and/or flakes.

The protected chamber, by reason of what is performed therein, can cooperate with means to feed the products to be treated inside it, and/or possible packs, or with means to carry out the operations, general or specialized containers, etc., and means to extract the products after possible working, or packaging.

In accordance with some embodiments, the protected chamber is connected to air recirculation means, suitable to deliver clean and controlled air to the inside. The air recirculation means can be possibly suitable, or also suitable, to remove excess air.

The protected chamber also cooperates with depression devices suitable to create inside it a desired depression, and to keep it in a tolerated interval of a predefined reference value. Preferably, the depression is such as to guarantee that the possible powders, residues or other of the hazardous, toxic and/or noxious products present in the protected chamber cannot exit to the outside, except through controlled and managed paths.

In accordance with the invention, the protected chamber comprises one or more functional access apertures through which utensils, containers, machine parts with a format such as to be able to be replaced and washed when the product is changed, the products to be treated themselves, or other, can be introduced inside the protected chamber, or extracted from it, in a protected manner. The functional access apertures are associated with introduction/extraction devices structured so as to prevent the direct connection between the inside and the outside of the protected chamber, but such as to allow, for example an operator, to interact with the products and/or with the equipment located inside the chamber.

One or more functional access apertures are present through which, for example, an operator can operate in a protected manner inside the protected chamber. The functional access apertures for the operator can be associated with handling devices, such as gloves.

In accordance with the invention, the protected chamber comprises at least a closing element configured to at least partly close the one or more functional access apertures. In other words, the functional access apertures can also be provided with at least one closing element, for example, windows, suitable to at least partly close the functional access apertures.

In accordance with the invention, the protected chamber is associated with control and command means configured to control and regulate the depression inside the protected chamber. The control and command means comprise, for example, measuring means configured to detect, continuously or periodically, the depression inside the protected chamber.

According to the invention, the measuring means are connected in feedback to the depression generator devices by means of a control and command unit that operates on the basis of a given reference value.

Depending on the result of the comparison between value detected and reference value given, the control and command unit commands the depression generator devices, adapting their suction capacity and making them suitable to return the depression to the interval of the predefined reference value.

It is known that the protected chamber, because of the functional activity carried out inside it, is subjected to variations in pressure generated by factors directly connected or in progress at the moment when the functional activity is carried out.

According to the invention, means are therefore provided that detect and control one or more functions that can directly or indirectly affect the value of the depression.

According to the invention, said means are therefore configured to determine a desired variation of the depression as a function of and in temporal proximity to an action that entails a variation thereof. Said variation can be progressive or pre-set, and can also be correlated, or not, to the function and action controlled.

The protected chamber comprises, in particular, at least a detection device to detect a potential disturbance factor of the depression inside the protected chamber, that is, a factor that involves one or more of the functional access apertures. The detection device is also associated with means configured to determine an at least temporary variation of the depression in the protected chamber in desired correlation with the detection of the potential disturbance factor.

In particular, the detection device of a potential disturbance factor of the depression can be associated with the at least one closing element of the functional access apertures and can also be configured to detect and/or enable an open state of the functional access apertures and therefore of the at least one associated closing element.

In some embodiments, the detection device of a potential disturbance factor of the depression can comprise elements or sensors directly connected to each closing element and configured to detect when the closing element is taken, or is about to be taken, from a closed state to an open state.

In accordance with other embodiments, a protected containment chamber is provided that comprises:
- entrances and exits associated with feed devices to feed products to be treated into the protected chamber, and extraction devices to remove the treated products after possible working
- one or more functional access apertures by means of which an operator can interact in protected mode with the products and/or equipment located inside the protected chamber;
- depression generator devices able to generate a desired value of depression in the protected chamber, and associated with control and command devices suitable to maintain the depression in continuity in a tolerated interval of said value, wherein the protected chamber comprises a detection device to detect a potential disturbance factor of the depression, which factor involves one or more of the functional access apertures, the detection device being associated with means configured to determine an at least temporary variation of the depression in the protected chamber in desired correlation with the detection of the potential disturbance factor.

According to one aspect of the invention, the protected chamber comprises at least a closing element configured to at least partly close the one or more functional access apertures and the detection device of a potential disturbance factor of the depression is associated with the at least one closing element and is configured to detect and/or enable an open or operating condition of the at least one closing element.

According to another aspect of the invention, the detection device of a potential disturbance factor of the depression comprises at least a detection member associated with at least an access device to access the inside of the protected containment chamber, and/or a handling device and/or an introduction/extraction device, the first, second or third being able to cooperate with a respective functional access aperture, the detection member being configured to detect any possible variation in volume inside the protected containment chamber due to the introduction/extraction of a body into/from the protected containment chamber and at the same time to command the depression generator devices and/or the control and command devices in order to consequently vary the depression in the protected chamber.

Embodiments of the invention also concern methods to control the depression inside a protected chamber or "containment chamber".

In accordance with possible embodiments, the method provides to:
- generate and maintain a desired depression inside the protected chamber in a tolerated interval of a predefined reference value and,
- determine a desired variation of the depression in the protected chamber as a function and in temporal proximity of an action that entails a variation thereof.

In particular, the method provides to increase the depression before or at most at the same time as any activity or operation that involves an interaction with one or more of the functional access apertures, and therefore a possible introduction of something into, or extraction from the protected chamber.

In some embodiments, the method provides to detect an open condition of at least one closing element associated with a respective one of said one or more of the functional access apertures and to command, as a consequence, the depression generator means to consequently vary the depression in the protected chamber.

In variant embodiments the method provides to enable the opening and/or the removal of the closing elements associated with the functional access apertures and to command, as a consequence, the depression generator means to vary the depression in the protected chamber.

According to variant embodiments, the variation of the depression is obtained setting a new reference value which can be activated by means of a feedback control.

The variation can be personalized depending on the event that leads to the variation of the depression in the protected chamber.

According to other variants, the variation of the depression can be obtained by acting directly on the depression generator means.

In accordance with other embodiments, a method is provided to control the depression in a protected chamber comprising entrances and exits associated with respective feed devices of products to be treated inside the protected chamber and extraction devices to remove the treated products after possible working, and one or more functional access apertures by means of which an operator can interact in protected mode with the products and/or the equipment located inside the protected chamber. According to some embodiments, a desired depression is generated and maintained in the protected chamber, in a tolerated interval of a desired depression value, by means of depression devices associated with control and command devices. Embodiments of the method provide to detect, by means of a detection device, a potential disturbance factor of the depression which involves one or more of the functional access apertures and to determine an at least temporary variation of the depression in the protected chamber in desired correlation with the detection of the potential disturbance factor.

In accordance with some embodiments, combinable with all the embodiments described here, the method provides to detect an open condition and/or to enable an open operating condition of at least one closing element associated with a respective one of the one or more functional access apertures and to command, according to defined timings, the depression generator devices or the control and command devices to vary the depression in the protected chamber.

In accordance with other embodiments, combinable with all the embodiments described here, the method comprises detecting an operating condition of an access device to access the inside of the protected containment chamber, and/or a handling device and/or an introduction/removal device, the first, second or third cooperating with a respective functional access aperture, in order to detect a possible variation in volume inside the protected containment chamber due to the introduction/extraction of a body into/from the protected containment chamber and at the same time to command, as a consequence, the depression generator devices or the control and command devices in order to vary the depression in the protected chamber.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematic view of a protected containment chamber in accordance with one embodiment;
- fig. 2 is a schematic view of a protected containment chamber in accordance with a first variant embodiment;
- fig. 3 is a schematic view of a protected containment chamber in accordance with a second variant embodiment.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawing. Each example is supplied by way of illustration of the invention and shall not be understood as a limitation thereof. It is understood that the scope of the present invention is only defined in the claims.

Embodiments described here concern a protected containment chamber 10, inside which, for example, operations and/or processing can be performed on products containing hazardous, noxious, and/or toxic materials, such as substances dangerous to humans, animals and/or the environment. These products can be supplied in bulk and handled, for example, to be singularized or grouped, for various purposes.

The products can be handled, for example but not necessarily, to introduce them into packs, jars, blisters, or to subject them to other processes. The products in question can be, for example, capsules, tablets, pills or bars. They can be, for example, medical and/or pharmaceutical products. For example, since they are able to be suitably fed to the protected chamber 10 in bulk and handled, for example for the purposes as above, the products can generate friction by rubbing, between each other and with respect to the surfaces and components of the protected chamber 10 or the feed system, producing powder, residues, waste, which can accumulate and/or can also be volatile, and which can be noxious and/or harmful to humans or animals, for example if inhaled or if they come into contact with the skin, mucous membranes or other, and/or for the environment in general.

The protected chamber 10 can cooperate with product feed devices 12 to feed inside it the products to be treated, and/or devices to feed possible packages 13, and extraction devices 14 configured to remove the treated products after possible processing or packaging. The feed devices 12, 13 and the extraction devices 14 can be positioned in any position as desired.

The feed devices 12, 13 and the extraction devices 14 can be connected, with suitable means, and in a known way, with the outside.

For example, in correspondence with the entrances and exits of the protected chamber 10 associated with the feed devices 12, 13 and the extraction devices 14, pre-chambers and post-chambers, not shown, provided with means to deliver filtered air can be present, suitable to create a "barrier" of air between the internal environment and the environment outside the protected chamber 10.

Inside the protected chamber 10 devices and equipment of various types can be disposed, suitable to carry out workings and/or handling of the products to be treated, not shown in the drawings.

By way of example only, the protected chamber 10 can be that of a blister machine. According to these embodiments, the product feed devices 12 can feed products such as tablets, or pills into the protected chamber 10, in which they are inserted, by means of the processing and/or handling devices, into the cells of a belt fed by the pack feed devices 13, while the extraction devices 14 take the blisters containing the tablets or pills to the outside.

According to some embodiments, the protected chamber 10 is connected to air recirculation means 16, which are suitable to deliver clean air, from which any impurities have been removed, into the protected chamber 10.

According to possible solutions, the air recirculation means 16 can possibly be suitable, or also suitable, to remove excess air.

The protected chamber 10 is connected to, and cooperates with, depression devices 18 suitable to create a depression inside the protected chamber 10, and to keep it around a tolerated interval, or below, of a predefined reference value VR.

In possible embodiments, the depression generator devices 18 are generally of a known type. For example, they can comprise a suction member 19, and a motor member 20 connected to the suction member 19 and configured to drive it as a function of the desired depression to be obtained.

The depression generator devices 18 are associated with detection, control and command means 28, in a known manner.

In accordance with some embodiments, the protected chamber 10 can comprise one or more functional access apertures 22, 23 which allow to introduce and/or extract and/or perform operations with and on the products and/or equipment located inside the protected chamber 10 in a protected manner.

To the functional access apertures 22, 23, respective access devices can be connected and associated to access the inside of the protected containment chamber 10, and/or handling devices 24, and/or introduction/extraction devices 25, which allow to interact with the inside but at the same time prevent a direct connection between the outside and the inside of the protected chamber 10.

In accordance with some embodiments, the handling devices 24 can comprise gloves by means of which an operator can introduce his hands into the protected chamber 10.

The handling devices, for example gloves, 24 are disposed in such a way as to seal a respective functional access aperture 22 and, when not in use, that is, when they are in an inoperative condition, they can be facing toward the outside of the protected chamber 10. In use, that is, in an operating condition, the handling devices, for example gloves, 24 are used, for example put on, by an operator who introduces them into the protected chamber 10 so as to be able to operate inside it without danger of contamination.

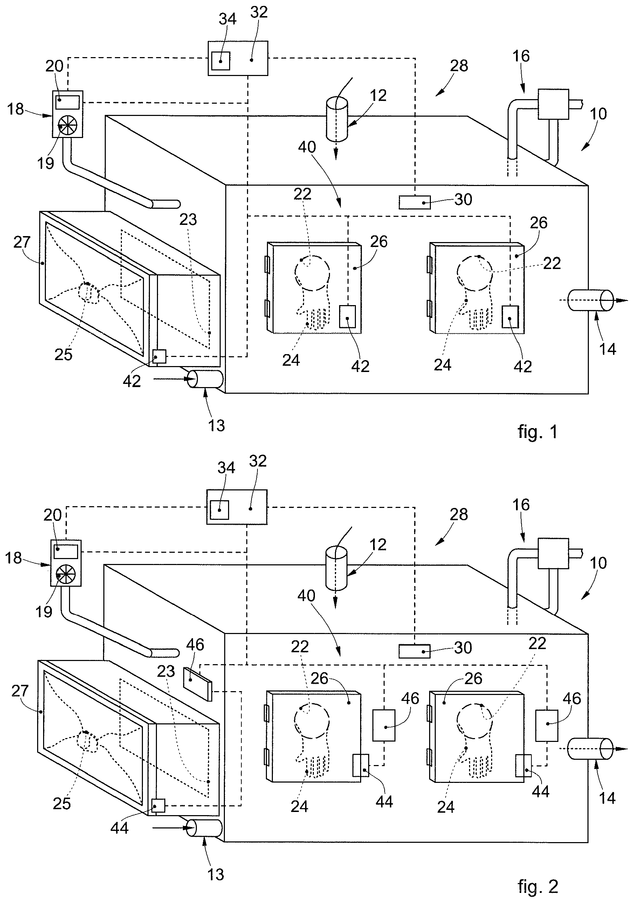

In accordance with some embodiments, the introduction/extraction devices 25 can comprise pre-chambers with a controlled atmosphere, in/out drawers, transit drawers, or systems with multiple bags defined as "liners" or "bag-in-bag", for example of the type shown in figs. 1-3.

By means of the introduction/extraction devices 25 it is possible, for example, to introduce into the protected chamber 10 small batches of products to be treated, instead of feeding them through the product feed devices 12. Moreover, it is possible to extract components or parts of the devices or from the equipment inside, closed in bags, to replace them, for example when a batch is changed, and/or to subject them to cleaning and washing or possibly maintenance.

According to one aspect of the invention, the protected chamber 10 comprises at least one closing element 26, 27 configured to at least partly close the one or more functional access apertures 22, 23.

According to some embodiments, the functional access apertures 22, 23 are provided with respective closing elements 26, 27 suitable to at least partly close a respective functional access aperture 22, 23.

In particular, the one or more closing elements 26, 27 can pass from an inoperative condition, in which they close the respective functional access apertures 22, 23, to an operating condition in which they allow access to them.

According to possible solutions, the one or more closing elements 26, 27 can be of any type, for example doors, flaps, lids, or suchlike.

The interaction with the protected chamber 10 through the functional access apertures 22, 23, in order to introduce the handling devices, for example gloves, 24 for example containing the hands of the operator, bodies, products or other objects inside the protected chamber 10, directly influences the free volume of the protected chamber 10 itself.

In particular, with the introduction of any object, the free volume of the protected chamber 10 decreases and consequently the depression decreases accordingly.

These events can be dangerous for the safety of the operators, since, if the difference in pressure between the external environment and the internal environment of the protected chamber 10 approaches, or exceeds, the value of 0 Pa, possible powders and residues of the hazardous, toxic and/or noxious products in the protected chamber 10 can leak out of it.

If one environment, for example at atmospheric pressure, is also only put into communication with a depressed environment, the air that enters into the depressed environment can create whirlpools that bring out powders present in the depressed protected chamber 10.

To keep the depression value controlled, the protected chamber 10 is associated with a control and command device 28, configured to control and regulate the depression inside the protected chamber 10.

The control and command device 28 is connected to the depression generator devices 18 and is configured to command their functioning so as to keep the depression in the protected chamber 10 in a desired interval of a reference value VR. The interval can be taken as a constant, or it can be set in relation to the specific disturbance event.

The control and command device 28 comprises one or more measurement sensors 30 configured to measure and detect, continuously or periodically, the depression inside the protected chamber 10.

In some embodiments, the measurement sensor 30 can be connected in feedback to the depression generator devices 18 by means of a control and command unit 32 which performs the comparison between the detected depression value and the set reference value VR.

Depending on the result of the comparison, the control and command unit 32 can then command the depression generator devices 18 to restore the depression around the reference value VR.

According to some embodiments, the control unit 32 can comprise, or be connected to, a memory unit 34, configured to memorize at least the reference value VR to be used for comparison with the data detected by the measurement sensor 30.

In accordance with some embodiments, under normal operating conditions of the protected chamber 10, the reference value VR can be set to a nominal value VN comprised, for example, between about -15 Pa and about -25 Pa, that is such as to guarantee that the powders and residues of the hazardous, toxic and/or noxious products present inside the protected chamber 10 remain inside it, but at the same time correlated to the processing operations of the products to be treated.

According to some embodiments, at least one temporary threshold value VT, different from the nominal value VN, can also be memorized in the memory unit 34.

In particular, the temporary threshold value VT can be set to a value defining a specifically correlated pressure difference between the internal environment and the environment outside the protected chamber 10 with respect to the nominal value VN.

By way of example, the temporary threshold value VT can be a value comprised between about -40 Pa and about -50 Pa, that is, such as to guarantee that, even if the handling devices, for example gloves, 24 for example containing the hands of an operator, and/or any other bodies or objects are introduced into the protected chamber 10, the depression inside it remains continuously below a safety depression value, and in any case always at negative values distant from zero.

According to the invention, the protected chamber 10 comprises means which detect and control one or more functions which can affect the value of the depression. In particular, the protected chamber 10 can comprise at least one detection device 40 able to detect a potential depression disturbance factor in the protected chamber 10 which affects one or more of the functional access apertures 22, 23. The detection device 40 is configured to determine an at least temporary variation of the depression in the protected chamber 10 in correlation with the detection of the potential disturbance factor.

In particular, the detection device 40 can be connected to at least one of the depression generator devices 18 and the control and command device 28, so as to communicate with them and/or drive them so as to vary the depression in the protected chamber 10 in correlation with the detection of the potential disturbance factor.

According to some embodiments, the potential disturbance factor detection device 40 is configured to determine a variation in the depression in the protected chamber 10 substantially at the same time as the detection of the potential disturbance factor. In this way, the variation of the depression in the protected chamber 10 is activated before, or at most simultaneously with, the occurrence of any action that requires an interaction with one or more of the functional access apertures 22, 23.

In this way it is possible to prevent, or at least strongly reduce, the risk that, by introducing something through the functional access apertures 22, 23, into the protected chamber 10, the depression could approach or exceed a safety threshold value.

In accordance with some embodiments, the detection device 40 can be configured to send a command to the control and command unit 32 to set the temporary value VT as the reference threshold value VR.

As a function of the new reference threshold value VR to be followed, the control and command unit 32 consequently regulates the action of the depression generator devices 18 to take the depression in the protected chamber 10 to the interval of the new reference value VR.

In this way the pressure in the protected chamber 10 is always regulated by means of the feedback control, but the variation of the depression is commanded, and starts, before or at the same time as a possible interaction with the functional access apertures 22, 23.

According to a possible variant, the detection device 40 can be configured to send a command directly to the depression generator devices 18. In these solutions, the detection device 40 can directly regulate the power of the depression generator devices 18, for example by making them work at 90-95% of their maximum power available.

According to possible solutions, shown for example in figs. 1 and 2, the detection device 40 can be associated with the one or more closing elements 26, 27 of the functional access apertures 22, 23 and can be configured to detect and/or enable an open or operating condition of the one or more closing elements 26, 27.

In accordance with embodiments described with reference to fig. 1, the detection device 40 can comprise one or more detection elements or members, or sensors, or microcontrollers, 42, associated with each closing element 26, 27 of the functional access apertures 22, 23 which involve interaction with the inside of the protected chamber 10.

The detection member, or sensor, or microcontroller, 42 can be configured to detect an operating condition that affects a closing element 22, 23 and to cause a variation in the depression inside the protected chamber 10 before something intervenes or is introduced into it.

According to possible variant embodiments, described for example with reference to fig. 2, the detection device 40 can comprise a blocking member 44 associated with each closing element 26, 27, and configured to inhibit its opening and/or removal, so as to prevent access to the respective functional access aperture 22 23. The detection device 40 can also be associated with at least one command member 46 which can be driven by an operator to deactivate the blocking member 44 and enable an operating condition of the respective closing element 26, 27.

According to some embodiments, a single command member 46 can be provided, able to deactivate the blocking members 44 of all the covering elements 26, 27, or a specific command member 46 can be provided for each blocking member 44.

According to some embodiments, the command member 46 can be configured to deactivate the blocking member 44 and at the same time to send a command to vary the depression inside the protected chamber 10 before any possible interaction with the functional access apertures 22, 23.

According to some embodiments, the command member 46 can comprise any one of either a pushbutton, a lever, a touch sensitive screen, a keyboard, a pedal, or other interface means drivable by an operator.

In accordance with possible embodiments, the detection device 40 of a potential depression disturbance factor comprises at least one detection member 42, 48, 49 associated with at least one access device to access the protected containment chamber 10, and/or with a handling device 24 and/or with an insertion/extraction device 25, the first, second or third of them being able to cooperate with a respective functional access aperture 22, 23. The detection member 42, 48, 49 can be configured to detect any possible variation in volume inside the protected containment chamber 10 due to the introduction/extraction of a body into/from the protected containment chamber 10 and at the same time to command the depression generator devices 18 and/or the control and command devices 28, 32 to consequently vary the depression in the protected chamber 10.

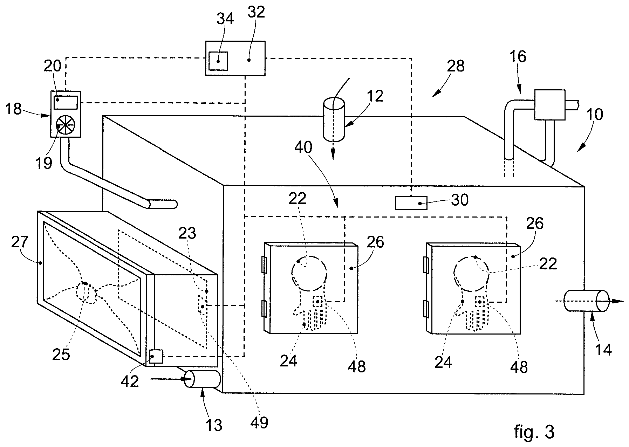

In particular, according to possible variant embodiments, described for example with reference to fig. 3, and combinable with the embodiments described above, the detection device 40 can comprise a detection member 48 associated with each handling device, for example a glove, 24, and suitable to detect for example when an operator is introducing a body, for example a hand, inside it. When it detects that an operator is inserting his hand into the handling device, for example a glove, 24 with which it is associated, the detection member 48 can send a signal or a command to the control and command unit 32, or directly to the depression generator devices 18 in order to vary the depression in the protected chamber 10.

According to other variants, not shown, the detection device 40 is associated with at least one introduction/extraction device 25, and is configured to detect an operating condition of the introduction/extraction device 25, and at the same time to command the depression generator devices 18 and/or control and command devices 28, 32 in order to vary the depression in the protected chamber 10. For example, the detection device 40 can comprise detection members configured to detect the forward or backward movement of a body associated with the introduction/extraction device 25, for example the bag of a liner-type introduction/extraction device 25.

In other possible variant embodiments, described for example with reference to fig. 3, and combinable with the embodiments described above, the detection device 40 can comprise a detection member 49 associated with the functional aperture 23 and suitable to detect the passage of a body from/to the inside of the protected chamber 10 and thus detect the respective variation in volume, consequently commanding the depression generator devices 18 and/or the control and command devices 28, 32 in order to vary the depression in the protected chamber 10.

According to possible embodiments, which can be combined with all the embodiments described here, the detection device 40 can be configured to determine an increase in the depression in the protected chamber 10.

In this way, the depression in the protected chamber 10 is automatically taken to a higher value than the nominal value VN before something is introduced inside it. In this way, even if the internal free space decreases, it is guaranteed that the depression remains below the predefined safety value and in any case at negative values and far from zero.

The provision that the detection device 40 automatically recognizes when conditions of access to the protected chamber 10 occur through the functional access apertures 22, 23, always guarantees a correct variation of the depression in the protected chamber 10, without the need for an operator to modify the depression autonomously, with the risk of forgetting.

In accordance with other embodiments, the detection device 40 can also be configured to stop the devices and equipment present in the protected chamber 10 in correlation with the detection of the potential disturbance factor, so that an operator can interact with the equipment and/or products present in it safely, without risking coming into contact with moving devices and members.

In other embodiments, the method can provide to detect an operating condition of a device to access the inside of the protected containment chamber 10, and/or a handling device 24 and/or an introduction/extraction device. 25, cooperating with a respective functional access aperture 22, 23, so as to detect a possible variation in volume inside the protected containment chamber 10 due to the introduction/extraction of a body into/from the protected containment chamber 10 and consequently command the depression generator devices 18 or the control and command devices 28, 32 in order to vary the depression in the protected chamber 10.

According to other variant embodiments, the method can provide to use the detection device 40, which can be configured, for example by means of one or more detection members 42, 48, 49, to detect when the one or more closing elements 26, 27, or a device to access the protected containment chamber 10 and/or handling devices, for example gloves, 24 and/or an introduction/extraction device 25, pass from the operating condition to the inoperative condition, and consequently to detect the corresponding variation in volume in the protected containment chamber 10, and to consequently command the depression generating members 18 and/or the control and command unit 32 to restore normal operating conditions.

Embodiments described here also concern a method which, in a protected chamber 10 in which a desired depression has been created and maintained in a tolerated interval of a predefined reference value, a variation of the depression in the protected chamber 10 is determined as a function of and in the temporal proximity of an action that entails a variation thereof.

In some embodiments the method can provide that, in anticipation, or at most simultaneously with the performance of an operation that involves the introduction of something into the internal free space of the protected chamber 10 through one or more functional access apertures. 22, 23, the depression in the protected chamber 10 is increased.

In some embodiments, the method provides to detect an open condition and/or to enable an open operating condition of the one or more closing elements 26, 27 associated with the respective functional apertures 22, 23 and consequently to command the depression generator devices 18, or the control and command unit 32, in order to vary the depression in the protected chamber 10.

According to possible variant embodiments, the method provides to detect an operating condition of each handling device, for example a glove, 24 associated with a respective functional access aperture 22, or to detect when an operator is introducing a hand inside it, and consequently to command the depression generator devices 18 or the control and command unit 32 in order to vary the depression in the protected chamber 10.

In other possible variant embodiments, which can be combined with the embodiments described above, the method can detect the passage of a body from/to the inside of the protected chamber 10 and thus detect the respective variation in volume, consequently commanding the depression generator devices 18 and/or the control and command devices 28, 32 in order to vary the depression in the protected chamber 10.

According to possible embodiments, the method provides to vary the depression by setting a new reference value by means of a feedback control.

According to possible variants, the method provides to vary the depression by acting directly on the depression devices 18.

It is clear that modifications and/or additions of parts can be made to the protected chamber 10 and connected method as described heretofore, without departing from the field and scope of the present invention.

It is also clear that, although the present invention has been described with reference to some specific examples, a person of skill in the art shall certainly be able to achieve many other equivalent forms of protected chamber 10 and connected method, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Protected containment chamber comprising:
- entrances and exits associated with feed devices (12, 13) configured to feed products to be treated in said protected chamber, and extraction devices (14) configured to remove the treated products after treatment;
- one or more functional access apertures (22, 23) by means of which an operator can interact in protected mode with the products and/or equipment located inside the protected chamber;
- depression generator devices (18) able to generate a desired value of depression in the protected chamber, and associated with control and command devices (28, 32) adapted to maintain said depression in continuity in a tolerated interval of said desired value, the protected chamber further comprising at least one closing element (26, 27) configured to at least partly close said one or more functional access apertures (22, 23),
**characterised in that**
said protected chamber comprises a detection device (40) configured to detect a potential disturbance factor of said depression which causes a change of the value of the depression inside the chamber, the detection device (40) being associated with means (18, 32) configured to determine an at least temporary variation of the depression in the protected chamber in correlation with the detection of the potential disturbance factor,
wherein said detection device (40) adapted to detect the potential disturbance factor of the depression is associated with said at least one closing element (26, 27) and is configured to detect an open condition of said at least one closing element (26, 27).

2. Protected chamber as in claim 1, **characterized in that** said detection device (40) of the potential disturbance factor of the depression comprises one or more sensors or microcontrollers (42) associated with said at least one closing element (26, 27) of the functional access apertures (22, 23), said one or more sensors or microcontrollers (42) being configured to detect when said at least one closing element (26, 27) is put to an open condition and to command, according to defined timings, the depression generator devices (18) and/or the control and command devices (28, 32) to vary the depression in the protected chamber.

3. Protected chamber as in claim 2, **characterized in that** it provides a plurality of said closing elements (26, 27) each associated with a respective one of said one or more sensors or microcontrollers (42).

4. Protected chamber as in claim 1, 2 or 3, **characterized in that** said detection device (40) of the potential disturbance factor of the depression comprises a blocking member (44) associated with said at least one closing element (26, 27), and configured to prevent its opening and/or its
removal, and at least a command member (46), drivable by an operator to deactivate said blocking member (44), and configured to enable an open operating condition of the respective closing element (26, 27) and at the same time to command the depression devices (18) and/or the control and command devices (28, 32) to vary the depression in the protected chamber.

5. Protected chamber as in claim 4, **characterized in that** it provides a plurality of said closing elements (26, 27) each associated with a respective blocking member (44).

6. Protected chamber as in any claim hereinbefore, **characterized in that** said detection device (40) of the potential disturbance factor of the depression comprises a detection member (48) associated with at least a handling device (24) cooperating with a respective one of said functional access apertures (22), said detection member (48) being suitable to detect when an operator is introducing a hand inside said at least a handling device (24), and at the same time to command the depression generator devices (18) and/or the control and command devices (28, 32) to vary the depression in the protected chamber.

7. Protected chamber as in any of the claims from 1 to 6, **characterized in that** said detection device (40) of the potential disturbance factor of the depression comprises further detection members associated with at least an introduction/extraction device (25), the introduction/extraction device (25) being configured to allow to interact with the inside of the protected chamber but at the same time to prevent a direct connection between the outside and the inside of the protected chamber, cooperating with a respective one of said functional access apertures (23), said further detection members being configured to detect an operating condition of said introduction/extraction device (25) while using said introduction/extraction device (25), and at the same time to command the depression generator devices (18) and/or the control and command devices (28, 32) to vary the depression in the protected chamber.

8. Protected containment chamber comprising:
- entrances and exits associated with feed devices (12, 13) configured to feed products to be treated in said protected chamber, and extraction devices (14) configured to remove the treated products after treatment;
- one or more functional access apertures (22, 23) by means of which an operator can interact in protected mode with the products and/or equipment located inside the protected chamber;
- depression generator devices (18) able to generate a desired value of depression in the protected chamber, and associated with control and command devices (28, 32) adapted to maintain said depression in continuity in a tolerated interval of said desired value,
**characterised in that** said protected chamber comprises a detection device (40) configured to detect a potential disturbance factor of said depression which causes a change of the value of the depression inside the chamber, said detection device (40) being associated with means (18, 32) configured to determine an at least temporary variation of the depression in the protected chamber in correlation with the detection of the potential disturbance factor, said detection device (40) of the potential disturbance factor of the depression further comprises at least a detection member (42, 48, 49) associated with at least a handling device (24) and/or an introduction/extraction device (25), the handling device (24) and/or introduction/extraction device (25) being configured to allow to interact with the inside of the protected chamber but at the same time to prevent a direct connection between the outside and the inside of the protected chamber, cooperating with a respective one of said one or more functional access apertures (22, 23), said detection member (42, 48, 49) being configured to detect any introduction/extraction of a body into/from said protected chamber while using said handling device (24) and/or introduction/extraction device (25) and at the same time to command the depression generator devices (18) and/or the control and command devices (28, 32) in order to consequently vary the depression generated in the protected chamber.

9. Method to control the depression in a protected chamber (10), comprising entrances and exits associated with respective feed devices (12, 13) to feed products to be treated inside said protected chamber, and extraction devices (14) to remove the treated products after treatment, and one or more functional access apertures (22, 23) by means of which an operator can interact in protected mode with the products and/or the equipment located inside the protected chamber, at least one closing element (26, 27) to at least partly close said one or more functional access apertures (22, 23),
wherein a desired depression is generated and maintained in said protected chamber (10), in continuity in a tolerated interval of a desired depression value, by means of depression generator devices (18) associated with control and command devices (28, 32),
**characterised in that** said method provides to detect, by means of a detection device (40), a potential disturbance factor of the depression which involves one or more of said functional access apertures (22, 23), and to determine an at least temporary variation of the depression in said protected chamber (10) in correlation with the detection of said potential disturbance factor, said method further provides to detect an open condition of the at least one closing element (26, 27) associated with a respective one of said one or more functional access apertures (22, 23) and to command, according to defined timing, the depression generator devices (18) and/or the control and command devices (28, 32) to vary the depression in said protected chamber (10).

10. Method as in claim 9, **characterized in that** it provides to detect an operating condition of at least one handling device (24) associated with a respective one of said functional access apertures (22), and to consequently command the depression generator devices (18) or the control and command devices (28, 32) to vary the depression in said protected chamber (10).

11. Method as in claim 9 or 10, **characterized in that** it provides to detect an operating condition of at least one introduction/extraction device (25) associated with a respective one of said functional access apertures (23), and to consequently command the depression generator devices (18) or the control and command devices (28, 32) to vary the depression in said protected chamber (10).

12. Method as in any of the claims from 9 to 11, **characterized in that** it provides to vary the depression in the protected chamber (10) with a feedback control, setting a new reference value by means of the control and command devices (28, 32) or it provides to vary the depression in the protected chamber (10) by acting directly on the depression generator devices (18).

13. Method as in any of the claims from 9 to 12, **characterized in that** it provides to vary the depression inside said protected chamber (10) before, or at most at the same time as, an interaction with said functional access apertures (22, 23).

14. Method as in any claim from 9 to 13, wherein the products to be treated inside said protected chamber contain hazardous, toxic and or noxious materials.

15. Method to control the depression in a protected chamber (10) comprising entrances and exits associated with respective feed devices (12, 13) of products to be treated inside said protected chamber, and extraction devices (14) to remove the treated products after treatment, and one or more functional access apertures (22, 23) by means of which an operator can interact in protected mode with the products and/or equipment located inside the protected chamber,
wherein, in said protected chamber (10), a desired depression is generated and maintained, in continuity in a tolerated interval of a desired depression value, by means of depression generator devices (18) associated with control and command devices (28, 32),
wherein said method provides to detect, by means of a detection device (40), a potential disturbance factor of the depression which involves one or more of said functional access apertures (22, 23), and to determine an at least temporary variation of the depression in said protected chamber (10),
**characterized in that** said method comprises detecting, by at least a detection member (42, 48, 49) associated with a handling device (24) and/or a introduction/extraction device (25), an operating condition of the handling device (24) and/or the introduction/extraction device (25), which allow to interact with the inside of the protected chamber but at the same time prevent a direct connection between the outside and the inside of the protected chamber, cooperating with a respective one of said functional access apertures (22, 23), in order to detect an introduction/extraction of a body into/from said protected chamber while using said handling device (24) and/or introduction/extraction device (25) and to command, as a consequence, the depression generator devices (18) or the control and command devices (28, 32) to vary the depression in said protected chamber (10).

## Patentansprüche

1. Geschützte Isolationskammer, aufweisend:
- Eingänge und Ausgänge, welche mit Zuführungsvorrichtungen (12, 13), welche dazu eingerichtet sind, zu behandelnde Produkte in die geschützte Kammer zuzuführen, und Extraktionsvorrichtungen (14), welche dazu eingerichtet sind, die behandelten Produkte nach der Behandlung zu entfernen, in Verbindung stehen,
- eine oder mehrere funktionale Zugangsöffnungen (22, 23), durch welche ein Bediener im geschützten Modus mit den in der geschützten Kammer befindlichen Produkten und/oder Geräten interagieren kann,
- Unterdruckerzeugungsvorrichtungen (18), welche dazu in der Lage sind, einen gewünschten Unterdruckwert in der geschützten Kammer zu erzeugen, und welche mit Steuer- und Befehlsvorrichtungen (28, 32) in Verbindung stehen, die dazu geeignet sind, den Unterdruck kontinuierlich in einem tolerierten Intervall des gewünschten Wertes aufrechtzuerhalten,
wobei die geschützte Kammer ferner mindestens ein Verschlusselement (26, 27) aufweist, welches dazu eingerichtet ist, die eine oder die mehreren funktionalen Zugangsöffnungen (22, 23) zumindest teilweise zu verschließen,
**dadurch gekennzeichnet, dass** die geschützte Kammer eine Erfassungsvorrichtung (40) aufweist, welche dazu eingerichtet ist, einen potenziellen Störfaktor des Unterdrucks, der eine Änderung des Wertes des Unterdrucks im Inneren der Kammer verursacht, zu erfassen,
wobei die Erfassungsvorrichtung (40) mit Mitteln (18, 32) in Verbindung steht, welche dazu eingerichtet sind, eine zumindest vorübergehende Veränderung des Unterdrucks in der geschützten Kammer in Korrelation mit der Erfassung des potenziellen Störfaktors zu ermitteln,
wobei die Erfassungsvorrichtung (40), welche dazu geeignet ist, den potenziellen Störfaktor des Unterdrucks zu erfassen, mit dem mindestens einen Verschlusselement (26, 27) in Verbindung steht und dazu eingerichtet ist, einen Offen-Zustand des mindestens einen Verschlusselements (26, 27) zu erfassen.

2. Geschützte Kammer nach Anspruch 1, **dadurch gekennzeichnet, dass** die Erfassungsvorrichtung (40) des potenziellen Störfaktors des Unterdrucks einen oder mehrere Sensoren oder Mikrocontroller (42) aufweist, welche mit dem mindestens einen Verschlusselement (26, 27) der funktionalen Zugangsöffnungen (22, 23) in Verbindung stehen, wobei der eine oder die mehreren Sensoren oder Mikrocontroller (42) dazu eingerichtet sind, zu erfassen, wenn das mindestens eine Schließelement (26, 27) in einen Offen-Zustand versetzt wird, und gemäß definierten Zeitabläufen die Unterdruckerzeugungsvorrichtungen (18) und/oder die Steuer- und Befehlsvorrichtungen (28, 32) anzuweisen, den Unterdruck in der geschützten Kammer zu verändern.

3. Geschützte Kammer nach Anspruch 2, **dadurch gekennzeichnet, dass** sie eine Mehrzahl von Schließelementen (26, 27) aufweist, die jeweils einem der einen oder mehreren Sensoren oder Mikrocontroller (42) zugeordnet sind.

4. Geschützte Kammer nach Anspruch 1, 2 oder 3, **dadurch gekennzeichnet, dass** die Erfassungsvorrichtung (40) des potenziellen Störfaktors des Unterdrucks ein Blockierelement (44), welches mit dem mindestens einen Schließelement (26, 27) in Verbindung steht und dazu eingerichtet ist, dessen Öffnung und/oder dessen Entfernung zu verhindern, und mindestens ein Befehlselement (46) aufweist, welches von einem Bediener betrieben werden kann, um das Blockierelement (44) zu deaktivieren, und welches dazu eingerichtet ist, einen offenen Betriebszustand des jeweiligen Schließelements (26, 27) zu ermöglichen und gleichzeitig die Unterdrückungsvorrichtungen (18) und/oder die Steuer- und Befehlsvorrichtungen (28, 32) anzuweisen, den Unterdruck in der geschützten Kammer zu verändern.

5. Geschützte Kammer nach Anspruch 4, **dadurch gekennzeichnet, dass** sie eine Mehrzahl von Schließelementen (26, 27) aufweist, die jeweils mit einem zugehörigen Blockierelement (44) in Verbindung stehen.

6. Geschützte Kammer nach einem der vorhergehenden Ansprüche, **dadurch gekennzeichnet, dass** die Erfassungsvorrichtung (40) des potenziellen Störfaktors des Unterdrucks ein Erfassungselement (48) aufweist, welches mit mindestens einer Handhabungsvorrichtung (24), die mit einer entsprechenden der funktionalen Zugangsöffnungen (22) zusammenwirkt, in Verbindung steht, wobei das Erfassungselement (48) dazu geeignet ist, zu erfassen, wenn ein Bediener eine Hand in die mindestens eine Handhabungsvorrichtung (24) einführt, und gleichzeitig die Unterdruckerzeugungsvorrichtungen (18) und/oder die Steuer- und Befehlsvorrichtungen (28, 32) anzuweisen, den Unterdruck in der geschützten Kammer zu verändern.

7. Geschützte Kammer nach einem der Ansprüche 1 bis 6, **dadurch gekennzeichnet, dass** die Erfassungsvorrichtung (40) des potenziellen Störfaktors des Unterdrucks weitere Erfassungselemente aufweist, welches mit mindestens einer mit einer jeweiligen der funktionalen Zugangsöffnungen (23) zusammenwirkenden Einführungs-/Entnahmevorrichtung (25) verbunden sind, wobei die Einführungs-/Entnahmevorrichtung (25) dazu eingerichtet ist, eine Interaktion mit dem Inneren der geschützten Kammer zu ermöglichen, aber gleichzeitig eine direkte Verbindung zwischen der Außenseite und dem Inneren der geschützten Kammer zu verhindern, wobei die weiteren Erfassungselemente dazu eingerichtet sind, einen Betriebszustand der Einführungs-/Entnahmevorrichtung (25) zu erfassen, während die Einführungs-/Entnahmevorrichtung (25) verwendet wird, und gleichzeitig die Unterdruckerzeugungsvorrichtungen (18) und/oder die Steuer- und Befehlsvorrichtungen (28, 32) anzuweisen, den Unterdruck in der geschützten Kammer zu verändern.

8. Geschützte Isolationskammer, aufweisend:
- Eingänge und Ausgänge, welche mit Zuführungsvorrichtungen (12, 13), die dazu eingerichtet sind, zu behandelnde Produkte in die geschützte Kammer zuzuführen, und Extraktionsvorrichtungen (14), die dazu eingerichtet sind, die behandelten Produkte nach der Behandlung zu entfernen, in Verbindung stehen,
- eine oder mehrere funktionale Zugangsöffnungen (22, 23), durch welche ein Bediener im geschützten Modus mit den in der geschützten Kammer befindlichen Produkten und/oder Geräten interagieren kann,
- Unterdruckerzeugungsvorrichtungen (18), welche dazu in der Lage sind, einen gewünschten Unterdruckwert in der geschützten Kammer zu erzeugen, und welceh mit Steuer- und Befehlsvorrichtungen (28, 32) in Verbindung steht, die dazu geeignet sind, den Unterdruck kontinuierlich in einem tolerierten Intervall des gewünschten Wertes aufrechtzuerhalten,
**dadurch gekennzeichnet, dass** die geschützte Kammer eine Erfassungsvorrichtung (40) aufweist, welche dazu eingerichtet ist, einen potenziellen Störfaktor des Unterdrucks, welcher eine Veränderung des Wertes des Unterdrucks innerhalb der Kammer verursacht, zu erfassen, wobei die Erfassungsvorrichtung (40) mit Mitteln (18, 32) in Verbindung steht, die dazu eingerichtet sind, eine zumindest vorübergehende Veränderung des Unterdrucks in der geschützten Kammer in Korrelation mit der Erfassung des potenziellen Störfaktors zu ermitteln, wobei die Erfassungsvorrichtung (40) des potenziellen Störfaktors des Unterdrucks ferner zumindest ein Erfassungselement (42, 48, 49) aufweist, welches mit zumindest einer mit einer jeweiligen der einen oder mehreren funktionalen Zugangsöffnungen (22, 23) zusammenwirkenden Handhabungsvorrichtung (24) und/oder Einführungs-/Entnahmevorrichtung (25) in Verbindung steht, wobei die Handhabungsvorrichtung (24) und/oder die Einführungs-/Entnahmevorrichtung (25) dazu eingerichtet ist, eine Interaktion mit dem Inneren der geschützten Kammer zu ermöglichen, aber gleichzeitig eine direkte Verbindung zwischen der Außenseite und dem Inneren der geschützten Kammer zu verhindern, wobei das Erfassungselement (42, 48, 49) dazu eingerichtet ist, jede Einführung/Entnahme eines Körpers in die/aus der geschützten Kammer unter Verwendung der Handhabungsvorrichtung (24) und/oder der Einführungs-/Entnahmevorrichtung (25) zu erfassen und gleichzeitig die Unterdruckerzeugungsvorrichtungen (18) und/oder die Steuer- und Befehlsvorrichtungen (28, 32) anzuweisen, folglich den in der geschützten Kammer erzeugten Unterdruck zu verändern.

9. Verfahren zur Steuerung des Unterdrucks in einer geschützten Kammer (10), welche aufweist Eingänge und Ausgänge, welche mit jeweiligen Zuführungsvorrichtungen (12, 13) zum Zuführen von zu behandelnden Produkten in die geschützte Kammer und Extraktionsvorrichtungen (14) zum Entfernen der behandelten Produkte nach der Behandlung in Verbindung stehen, und eine oder mehrere funktionale Zugangsöffnungen (22, 23), mittels welcher ein Bediener im geschützten Modus mit den Produkten und/oder den Geräten, die sich in der geschützten Kammer befinden, interagieren kann, mindestens ein Verschlusselement (26, 27) zum zumindest teilweisen Verschließen der einen oder der mehreren funktionalen Zugangsöffnungen (22, 23),
wobei ein gewünschter Unterdruck in der geschützten Kammer (10) erzeugt und kontinuierlich in einem tolerierten Intervall eines gewünschten Unterdruckwerts aufrechterhalten wird mittels Unterdruckerzeugungsvorrichtungen (18), welche mit Steuer- und Befehlsvorrichtungen (28, 32) in Verbindung stehen, **dadurch gekennzeichnet, dass** das Verfahren vorsieht, mittels einer Erfassungsvorrichtung (40), einen potenziellen Störfaktor des Unterdrucks, der eine oder mehrere der funktionalen Zugangsöffnungen (22, 23) involviert, zu erfassen und eine zumindest vorübergehende Veränderung des Unterdrucks in der geschützten Kammer (10) in Korrelation mit der Erfassung des potenziellen Störfaktors zu ermitteln,
wobei das Verfahren ferner vorsieht, einen Offen-Zustand des mindestens einen Verschlusselements (26, 27), das mit einer jeweiligen der einen oder mehreren funktionalen Zugangsöffnungen (22, 23) in Verbindung steht, zu erfassen und gemäß einem definierten Zeitablauf die Unterdruckerzeugungsvorrichtungen (18) und/oder die Steuer- und Befehlsvorrichtungen (28, 32) anzuweisen, den Unterdruck in der geschützten Kammer (10) zu verändern.

10. Verfahren nach Anspruch 9, **dadurch gekennzeichnet, dass** es vorsieht, einen Betriebszustand von mindestens einer Handhabungsvorrichtung (24), die mit einer jeweiligen der funktionalen Zugangsöffnungen (22) in Verbindung steht, zu erfassen und folglich die Unterdruckerzeugungsvorrichtungen (18) oder die Steuer- und Befehlsvorrichtungen (28, 32) anzuweisen, den Unterdruck in der geschützten Kammer (10) zu verändern.

11. Verfahren nach Anspruch 9 oder 10, **dadurch gekennzeichnet, dass** es vorsieht, einen Betriebszustand von mindestens einer Einführungs-/Entnahmevorrichtung (25), die mit einer jeweiligen der funktionalen Zugangsöffnungen (23) in Verbindung steht, zu erfassen und folglich die Unterdruckerzeugungsvorrichtungen (18) oder die Steuer- und Befehlsvorrichtungen (28, 32) anzuweisen, den Unterdruck in der geschützten Kammer (10) zu verändern.

12. Verfahren nach einem der Ansprüche 9 bis 11, **dadurch gekennzeichnet, dass** es vorsieht, den Unterdruck in der geschützten Kammer (10) mit einer Regelung zu verändern, wobei ein neuer Referenzwert mittels der Steuer- und Befehlsvorrichtungen (28, 32) eingestellt wird, oder es vorsieht, den Unterdruck in der geschützten Kammer (10) durch direkte Einwirkung auf die Unterdruckerzeugungsvorrichtungen (18) zu verändern.

13. Verfahren nach einem der Ansprüche 9 bis 12, **dadurch gekennzeichnet, dass** es vorsieht, den Unterdruck im Inneren der geschützten Kammer (10) vor oder höchstens gleichzeitig mit einer Interaktion mit den funktionalen Zugangsöffnungen (22, 23) zu verändern.

14. Verfahren nach einem der Ansprüche 9 bis 13, wobei die im Inneren der geschützten Kammer zu behandelnden Produkte gefährliche, giftige und/oder schädliche Materialien enthalten.

15. Verfahren zur Steuerung des Unterdrucks in einer geschützten Kammer (10), welche aufweist Eingänge und Ausgänge, die mit jeweiligen Zuführungsvorrichtungen (12, 13) von im Inneren der geschützten Kammer zu behandelnden Produkten sowie Extraktionsvorrichtungen (14) zum Entfernen der behandelten Produkte nach der Behandlung in Verbindung stehen, und eine oder mehrere funktionale Zugangsöffnungen (22, 23), durch welche ein Bediener im geschützten Modus mit den im Inneren der geschützten Kammer befindlichen Produkten und/oder Geräten interagieren kann,
wobei in der geschützten Kammer (10) ein gewünschter Unterdruck erzeugt und kontinuierlich in einem tolerierten Intervall eines gewünschten Unterdruckwertes aufrechterhalten wird mittels Unterdruckerzeugungsvorrichtungen (18), welche mit Steuer- und Befehlsvorrichtungen (28, 32) in Verbindung stehen,
wobei das Verfahren vorsieht, mittels einer Erfassungsvorrichtung (40), einen potenziellen Störfaktor des Unterdrucks, der eine oder mehrere der funktionalen Zugangsöffnungen (22, 23) involviert, zu erfassen und eine zumindest vorübergehende Veränderung des Unterdrucks in der geschützten Kammer (10) zu ermitteln,
**dadurch gekennzeichnet, dass** das Verfahren das Erfassen, durch mindestens ein mit einer Handhabungsvorrichtung (24) und/oder einer Einführungs-/Entnahmevorrichtung (25) verbundenes Erfassungselement (42, 48, 49), eines Betriebszustands der mit einer jeweiligen der funktionalen Zugangsöffnungen (22, 23) zusammenwirkenden Handhabungsvorrichtung (24) und/oder der Einführungs-/Entnahmevorrichtung (25), welche eine Interaktion mit dem Inneren der geschützten Kammer ermöglichen, aber gleichzeitig eine direkte Verbindung zwischen der Außenseite und dem Inneren der geschützten Kammer verhindern, aufweist, um eine Einführung/Entnahme eines Körpers in/aus der geschützten Kammer zu erfassen, während die Handhabungsvorrichtung (24) und/oder die Einführungs-/Entnahmevorrichtung (25) verwendet wird, und um infolgedessen die Unterdruckerzeugungsvorrichtungen (18) oder die Steuer- und Befehlsvorrichtungen (28, 32) anzuweisen, den Unterdruck in der geschützten Kammer (10) zu verändern.

## Revendications

1. Chambre de confinement protégée comprenant :
- des entrées et sorties associées aux dispositifs d'alimentation (12, 13) configurés pour alimenter les produits à traiter dans ladite chambre protégée, et des dispositifs d'extraction (14) configurés pour retirer les produits traités après traitement ;
- une ou plusieurs ouvertures d'accès fonctionnelles (22, 23) au moyen desquelles un opérateur peut interagir en mode protégé avec les produits et/ou équipements situés à l'intérieur de la chambre protégée ;
- des dispositifs de génération de dépression (18) capables de générer une valeur souhaitée de dépression dans la chambre protégée, et associés à des dispositifs de contrôle et de commande (28, 32) adaptés pour maintenir ladite dépression en continuité dans un intervalle toléré de ladite valeur souhaitée, la chambre protégée comprenant en outre au moins un élément de fermeture (26, 27) configuré pour fermer au moins partiellement lesdites une ou plusieurs ouvertures d'accès fonctionnelles (22, 23), **caractérisée en ce que** ladite chambre protégée comprend un dispositif de détection (40) configuré pour détecter un facteur de perturbation potentiel de ladite dépression qui provoque un changement de la valeur de la dépression à l'intérieur de la chambre, le dispositif de détection (40) étant associé à des moyens (18, 32) configurés pour déterminer une variation au moins temporaire de la dépression dans la chambre protégée en corrélation avec la détection du facteur de perturbation potentiel, dans laquelle ledit dispositif de détection (40) adapté pour détecter le facteur de perturbation potentiel de la dépression est associé audit au moins un élément de fermeture (26, 27) et est configuré pour détecter un état ouvert dudit au moins un élément de fermeture (26, 27).

2. Chambre protégée selon la revendication 1, **caractérisée en ce que** ledit dispositif de détection (40) du facteur de perturbation potentiel de la dépression comprend un ou plusieurs capteurs ou microcontrôleurs (42) associés audit au moins un élément de fermeture (26, 27) des ouvertures d'accès fonctionnelles (22, 23), lesdits un ou plusieurs capteurs ou microcontrôleurs (42) étant configurés pour détecter lorsque ledit au moins un élément de fermeture (26, 27) est mis dans un état ouvert et pour commander, selon des horaires définis, les dispositifs de génération de dépression (18) et/ou les dispositifs de contrôle et de commande (28, 32) pour faire varier la dépression dans la chambre protégée.

3. Chambre protégée selon la revendication 2, **caractérisée en ce qu'**elle fournit une pluralité desdits éléments de fermeture (26, 27) chacun associé à l'un respectif desdits un ou plusieurs capteurs ou microcontrôleurs (42).

4. Chambre protégée selon la revendication 1, 2 ou 3, **caractérisée en ce que** ledit dispositif de détection (40) du facteur de perturbation potentiel de la dépression comprend un élément de blocage (44) associé audit au moins un élément de fermeture (26, 27), et configuré pour empêcher son ouverture et/ou son retrait, et au moins un élément de contrôle (46), pouvant être entraîné par un opérateur afin de désactiver ledit élément de blocage (44), et configuré pour permettre une condition de fonctionnement ouverte de l'élément de fermeture respectif (26, 27) et en même temps pour commander les dispositifs de dépression (18) et/ou les dispositifs de contrôle et de commande (28, 32) pour faire varier la dépression dans la chambre protégée.

5. Chambre protégée selon la revendication 4, **caractérisée en ce qu'**elle fournit une pluralité desdits éléments de fermeture (26, 27) chacun associé à un élément de blocage respectif (44).

6. Chambre protégée selon l'une quelconque des revendications précédentes, **caractérisée en ce que** ledit dispositif de détection (40) du facteur de perturbation potentiel de la dépression comprend un élément de détection (48) associé à au moins un dispositif de manipulation (24) coopérant avec l'une respective desdites ouvertures d'accès fonctionnelles (22), ledit élément de détection (48) étant approprié pour détecter lorsqu'un opérateur introduit une main à l'intérieur dudit au moins un dispositif de manipulation (24), et en même temps pour commander les dispositifs de génération de dépression (18) et/ou les dispositifs de contrôle et de commande (28, 32) pour faire varier la dépression dans la chambre protégée.

7. Chambre protégée selon l'une quelconque des revendications 1 à 6, **caractérisée en ce que** ledit dispositif de détection (40) du facteur de perturbation potentiel de la dépression comprend d'autres éléments de détection associés à au moins un dispositif d'introduction/extraction (25), le dispositif d'introduction/extraction (25) étant configuré pour permettre d'interagir avec l'intérieur de la chambre protégée mais en même temps pour empêcher une connexion directe entre l'extérieur et l'intérieur de la chambre protégée, coopérant avec l'une respective desdites ouvertures d'accès fonctionnelles (23), lesdits autres éléments de détection étant configurés pour détecter un état de fonctionnement dudit dispositif d'introduction/extraction (25) tout en utilisant ledit dispositif d'introduction/extraction (25), et en même temps pour commander les dispositifs de génération de dépression (18) et/ou les dispositifs de contrôle et de commande (28, 32) pour faire varier la dépression dans la chambre protégée.

8. Chambre de confinement protégée comprenant :
- les entrées et sorties associées aux dispositifs d'alimentation (12, 13) configurés pour alimenter les produits à traiter dans ladite chambre protégée, et aux dispositifs d'extraction (14) configurés pour retirer les produits traités après traitement ;
- une ou plusieurs ouvertures d'accès fonctionnelles (22, 23) au moyen desquelles un opérateur peut interagir en mode protégé avec les produits et/ou équipements situés à l'intérieur de la chambre protégée ;
- des dispositifs de génération de dépression (18) capables de générer une valeur souhaitée de dépression dans la chambre protégée, et associés à des dispositifs de contrôle et de commande (28, 32) adaptés pour maintenir ladite dépression en continuité dans un intervalle toléré de ladite valeur souhaitée, **caractérisée en ce que** ladite chambre protégée comprend un dispositif de détection (40) configuré pour détecter un facteur de perturbation potentiel de ladite dépression qui provoque un changement de la valeur de la dépression à l'intérieur de la chambre, ledit dispositif de détection (40) étant associé à des moyens (18, 32) configurés pour déterminer une variation au moins temporaire de la dépression dans la chambre protégée en corrélation avec la détection du facteur de perturbation potentiel, ledit dispositif de détection (40) du facteur de perturbation potentiel de la dépression comprend en outre au moins un élément de détection (42, 48, 49) associé à au moins un dispositif de manipulation (24) et/ou un dispositif d'introduction/extraction (25), le dispositif de manipulation (24) et/ou le dispositif d'introduction/extraction (25) étant configuré pour permettre d'interagir avec l'intérieur de la chambre protégée mais en même temps pour empêcher une connexion directe entre l'extérieur et l'intérieur de la chambre protégée, coopérant avec l'une respective desdites une ou plusieurs ouvertures d'accès fonctionnelles (22, 23), ledit élément de détection (42, 48, 49) étant configuré pour détecter toute introduction/extraction d'un corps dans/de ladite chambre protégée tout en utilisant ledit dispositif de manipulation (24) et/ou dispositif d'introduction/extraction (25) et en même temps pour commander les dispositifs de génération de dépression (18) et/ou les dispositifs de contrôle et de commande (28, 32) afin de faire varier par conséquent la dépression générée dans la chambre protégée.

9. Procédé de contrôle de la dépression dans une chambre protégée (10), comprenant des entrées et des sorties associées à des dispositifs d'alimentation respectifs (12, 13) pour alimenter des produits à traiter à l'intérieur de ladite chambre protégée, et des dispositifs d'extraction (14) pour retirer les produits traités après traitement, et une ou plusieurs ouvertures d'accès fonctionnelles (22, 23) au moyen desquelles un opérateur peut interagir en mode protégé avec les produits et/ou les équipements situés à l'intérieur de la chambre protégée, au moins un élément de fermeture (26, 27) pour fermer au moins partiellement lesdites une ou plusieurs ouvertures d'accès fonctionnelles (22, 23), dans lequel une dépression souhaitée est générée et maintenue dans ladite chambre protégée (10), en continuité dans un intervalle toléré d'une valeur de dépression souhaitée, au moyen de dispositifs de génération de dépression (18) associés à des dispositifs de contrôle et de commande (28, 32), **caractérisé en ce que** ledit procédé prévoit de détecter, au moyen d'un dispositif de détection (40), un facteur de perturbation potentiel de la dépression qui implique une ou plusieurs desdites ouvertures d'accès fonctionnelles (22, 23), et de déterminer une variation au moins temporaire de la dépression dans ladite chambre protégée (10) en corrélation avec la détection dudit facteur de perturbation potentiel, ledit procédé prévoit en outre de détecter un état ouvert de l'au moins un élément de fermeture (26, 27) associé à l'une respective desdites une ou plusieurs ouvertures d'accès fonctionnelles (22, 23) et de commander, selon un horaire défini, les dispositifs de génération de dépression (18) et/ou les dispositifs de contrôle et de commande (28, 32) pour faire varier la dépression dans ladite chambre protégée (10).

10. Procédé selon la revendication 9, **caractérisé en ce qu'**il prévoit de détecter un état de fonctionnement d'au moins un dispositif de manipulation (24) associé à l'une respective desdites ouvertures d'accès fonctionnelles (22), et de commander par conséquent les dispositifs de génération de dépression (18) ou les dispositifs de contrôle et de commande (28, 32) pour faire varier la dépression dans ladite chambre protégée (10).

11. Procédé selon la revendication 9 ou 10, **caractérisé en ce qu'**il prévoit de détecter un état de fonctionnement d'au moins un dispositif d'introduction/extraction (25) associé à l'une respective desdites ouvertures d'accès fonctionnelles (23), et de commander par conséquent les dispositifs de génération de dépression (18) ou les dispositifs de contrôle et de commande (28, 32) pour faire varier la dépression dans ladite chambre protégée (10).

12. Procédé selon l'une quelconque des revendications 9 à 11, **caractérisé en ce qu'**il prévoit de faire varier la dépression dans la chambre protégée (10) avec une régulation négative, en établissant une nouvelle valeur de référence au moyen des dispositifs de contrôle et de commande (28, 32) ou il prévoit de faire varier la dépression dans la chambre protégée (10) en agissant directement sur les dispositifs de génération de dépression (18).

13. Procédé selon l'une quelconque des revendications 9 à 12, **caractérisé en ce qu'**il prévoit de faire varier la dépression à l'intérieur de ladite chambre protégée (10) avant, ou au plus en même temps qu'une interaction avec lesdites ouvertures d'accès fonctionnelles (22, 23).

14. Procédé selon l'une quelconque des revendications 9 à 13, dans lequel les produits à traiter à l'intérieur de ladite chambre protégée contiennent des matières dangereuses, toxiques et/ou nocives.

15. Procédé de contrôle de la dépression dans une chambre protégée (10) comprenant des entrées et des sorties associées à des dispositifs d'alimentation respectifs (12, 13) de produits à traiter à l'intérieur de ladite chambre protégée, et des dispositifs d'extraction (14) pour retirer les produits traités après traitement, et une ou plusieurs ouvertures d'accès fonctionnelles (22, 23) au moyen desquelles un opérateur peut interagir en mode protégé avec les produits et/ou l'équipement situés à l'intérieur de la chambre protégée,
dans lequel, dans ladite chambre protégée (10), une dépression souhaitée est générée et maintenue, en continuité dans un intervalle toléré d'une valeur de dépression souhaitée, au moyen de dispositifs de génération de dépression (18) associés à des dispositifs de contrôle et de commande (28, 32), dans lequel ledit procédé prévoit de détecter, au moyen d'un dispositif de détection (40), un facteur de perturbation potentiel de la dépression qui implique une ou plusieurs desdites ouvertures d'accès fonctionnelles (22, 23), et de déterminer une variation au moins temporaire de la dépression dans ladite chambre protégée (10),
**caractérisé en ce que** ledit procédé consiste à détecter, par au moins un élément de détection (42, 48, 49) associé à un dispositif de manipulation (24) et/ou un dispositif d'introduction/extraction (25), un état de fonctionnement du dispositif de manipulation (24) et/ou du dispositif d'introduction/extraction (25), qui permettent d'interagir avec l'intérieur de la chambre protégée mais en même temps d'empêcher une connexion directe entre l'extérieur et l'intérieur de la chambre protégée, coopérant avec l'une respective desdites ouvertures d'accès fonctionnelles (22, 23), afin de détecter une introduction/extraction d'un corps dans/de ladite chambre protégée tout en utilisant ledit dispositif de manipulation (24) et/ou dispositif d'introduction/extraction (25) et de commander, par conséquent, les dispositifs de génération de dépression (18) ou les dispositifs de contrôle et de commande (28, 32) pour faire varier la dépression dans ladite chambre protégée (10).
